# EUROPEAN PATENT SPECIFICATION

(11) **EP 2 984 322 B1**
(45) Date of publication and mention of the grant of the patent: **24.10.2018**
(21) Application number: 14722687.2
(22) Date of filing: 08.04.2014
(51) Int. Cl.: F02D 19/06, F02D 29/06, F02D 19/10, F02D 41/00, F02D 41/40

(54) **METHOD OF OPERATING AN ELECTRIC POWER GENERATOR SET AND AN ELECTRIC POWER GENERATOR SET**
VERFAHREN ZUM BETREIBEN EINES ELEKTRISCHEN STROMGENERATORSATZES UND ELEKTRISCHER STROMGENERATORSATZ
PROCÉDÉ D'EXPLOITATION D'UN ENSEMBLE GÉNÉRATEUR D'ÉLECTRICITÉ ET ENSEMBLE GÉNÉRATEUR D'ÉLECTRICITÉ

(30) Priority: 09.04.2013 FI 20135344
(43) Date of publication of application: 17.02.2016
(60) Divisional application: 18191049.8
(73) Proprietor: Wärtsilä Finland Oy, 65380 Vaasa (FI)
(72) Inventor: CARLSON, John, FI-65100 Vaasa (FI); GRÖNLUND, Tore, FI-65610 Mustasaari (FI)
(74) Representative: Genip Oy
(86) International application number: PCT/FI2014/050244
(87) International publication number: WO 2014/167177

(56) References cited:
- EP-A1- 1 923 556
- WO-A1-2010/134994
- WO-A1-2011/088483
- US-A1- 2002 157 619
- US-A1- 2012 139 264
- US-A1- 2012 175 876
- ULUGBEK AZIMOV ET AL: "Multidimensional CFD simulation of syngas combustion in a micro-pilot-ignited dual-fuel engine using a constructed chemical kinetics mechanism", INTERNATIONAL JOURNAL OF HYDROGEN ENERGY, ELSEVIER SCIENCE PUBLISHERS B.V., BARKING, GB, vol. 36, no. 21, 30 July 2011 (2011-07-30) , pages 13793-13807, XP028391340, ISSN: 0360-3199, DOI: 10.1016/J.IJHYDENE.2011.07.140 [retrieved on 2011-08-08]
- SAHOO B B ET AL: "Effect of engine parameters and type of gaseous fuel on the performance of dual-fuel gas diesel engines-A critical review", RENEWABLE AND SUSTAINABLE ENERGY REVIEWS, ELSEVIERS SCIENCE, NEW YORK, NY, US, vol. 13, no. 6-7, 1 August 2009 (2009-08-01), pages 1151-1184, XP026049123, ISSN: 1364-0321, DOI: 10.1016/J.RSER.2008.08.003 [retrieved on 2008-10-01]

## Description

### Technical field

Invention relates to a method of operating an electric power generator set comprising a gas operated internal combustion piston engine coupled with an electric generator in which gaseous fuel is fed as a main fuel into combustion chambers of the engine along with the combustion air and the mixture of the gaseous fuel and air is ignited by injecting an amount of pilot fuel, the timing of the pilot fuel injection is controlled based on engine's operational parameters and the state of the electric grid, to which the generator is connected, is monitored.

Invention relates also to an electric power generator set comprising a gas operated internal combustion piston engine coupled with an electric generator, and each cylinder of the engine is provided with a pilot fuel injector, and a controller.

### Background art

Reciprocating piston engine is a known power source for electricity production in stationary power plants as well as in marine vessels. It is also known to operate such engine by making use of gaseous fuel. For power plants using gas as fuel, it is usually possible to feed the power plant with gas of various qualities, more specifically various heat values.

Generally in combustion engines fueled by gas, also known as gas combustion engines, the fuel is ignited e.g. by using so called pilot fuel, which is typically liquid fuel such as fight fuel oil LFO. The timing and quantity of supplying pilot fuel into the cylinder are important for efficient engine operation. If the timing or quantity is not correct, the cylinder will operate inefficiently. The cylinder's emissions will also increase. If there is too much pilot fuel, the combustion of fuel in the cylinder generates harmful nitrogen oxides (NOx). On the other hand, if there is too little pilot fuel, the combustion of fuel in the cylinder may generate unburned hydrocarbons (UHC). The quantity and timing of pilot fuel are commonly regulated with the aim of reducing NOx and UHC emissions and maintaining good engine efficiency. Load on the engine affects combustion conditions in the cylinders. The quantity of pilot fuel required at light load differs from that required at heavy loads.

WO2009122011 A1 discloses a manner of controlling the timing of the maximum pressure in the cylinders of an engine in respect of the crank angle. The document suggests to control the duration of total pilot fuel injection into all cylinders of the engine if the average crankshaft angle at maximum pressure is outside the range of crankshaft angle variation. The duration of total pilot fuel injection affects the quantity of pilot fuel injected into each cylinder, which affects ignition and therefore shifts the point of maximum pressure. If the quantity of total pilot fuel is increased, the pilot fuel and actual fuel will ignite earlier, which means that the point of maximum pressure moves to an earlier point in the cylinder's cycle. If the quantity of total pilot fuel is decreased, the pilot fuel and actual fuel will ignite later, which means that the point of maximum pressure moves to a later point in the cylinder's cycle.

The combination of the generator and the engine is often called as a generator set. In a generator set operated by a gas engine the load angle is the angle of a sinusoidal power curve at the generator terminal at which point mechanical power input and electrical power output of the generator are in balance. In other words, the generator operates at a certain power level and load angle, by which angle the generator rotor angle leads the grid angle. The engine feeds mechanical power to the generator.

During faults in an electric power system it is essential to maintain the synchronism of a generator in order to be able to continue operation after the fault clearance. A significant fault is, for example, three-phase short circuit, which leads on to a system voltage collapse at the fault location, hence causing the synchronizing torque between the generating unit and the grid to reduce significantly.

Typically, during these faults the load angle between the generator and the grid begins to open because the large inertia of the grid maintains the grid speed (phase) constant. However, the individual generator locating close to the place of the fault will accelerate due to loss of load even to almost zero when the voltage disappears while the driving power (torque) from the prime mover maintains almost constant level.

WO2011018549 A3 suggest for solution in general a protection arrangement of an electric grid, in which relay arrangement is adapted to detect over-current, under-voltage or both, the protection arrangement comprising a speed/load controller that is in connection with the relay arrangement, which speed/load controller is arranged to drive a prime mover of a generator set as a response for the said detection, said speed/load controller being connectable with said prime mover, the speed/load controller driving power output of the prime mover to a lower level when over-current, under-voltage or both is detected. WO2011018549 A3 describes the effect of controlling the driving power output of the prime mover to a lower level during a disturbance providing longer time of fault clearing.

There is a need to provide a way for rapidly reducing the load produced by a gas engine for short period of time. Thus it is an object of the invention to provide method of operating an electric power generator set comprising a gas operated internal combustion piston engine coupled with an electric generator which solves that problem.

### Disclosure of the Invention

Objects of the invention can be met substantially as is disclosed in the independent claims and in the other claims describing more details of different embodiments of the invention.

Method of operating an electric power generator set comprising a gas operated internal combustion piston engine coupled with an electric generator in which gaseous fuel is fed as a main fuel into combustion chambers of the engine along with the combustion air and the mixture of the gaseous fuel and air is ignited by injecting an amount of pilot fuel, and during the normal operation of the engine the timing of the pilot fuel injection is controlled based on engine's operational parameters and in the method the state of the electric grid, to which the generator is connected, is monitored. In case of a disturbance in the grid is detected, the control of the timing of the pilot fuel injection is effected based on the grid disturbance so that the timing of the fuel injection is retarded by predetermined crank angle due to the disturbance.

This way it is possible to rapidly effect on load of the engine.

According to the invention the pilot fuel injection is controlled based on engine's operational parameters and the timing of the pilot fuel injection is controlled so that the start of injection is determined by a set crank angle value based on the engine's operational parameters which set value is retarded by predetermined crank angle due to the disturbance.

Thus it is possible to minimize the discrepancy between required load and produced power during the grid disturbance without causing the engine to over speed, avoiding desynchronization of the grid and the generator set. Additionally gas that continues to flow into the engine is still combusted, which reduces methane slip emissions and the danger of an exhaust gas explosion.

According to an embodiment of the invention the set crank angle value at which the pilot injection starts is retarded 25 - 40° CA from the value used during the normal operation of the engine.

According to an embodiment of the invention the set crank angle value is retarded based on the load of the engine so that the retarding is proportional to the load of the engine.

According to an embodiment of the invention while the engine is operated at load <= 50% the set crank angle (CA) value is retarded 25 - 35° CA.

According to an embodiment of the invention the set crank angle (CA) value is retarded to be >=4° CA before at top dead center.

According to an embodiment of the invention while the engine is operated at load > 50% the set crank angle value is retarded 30 - 40° CA.

According to an embodiment of the invention the set crank angle value is retarded to be at top dead center or after that during at load more than 50%.

According to an embodiment of the invention the engine is operated during the normal operation such that the pilot fuel injection is started at crank angle before top dead center position of the piston and in case of a disturbance in the grid is detected, the control of the timing of the pilot fuel injection is effected based on the grid disturbance so that the timing of the fuel injection is retarded to be 0 -15° CA after the top dead center.

According to an embodiment of the invention the method of operating an electric power generator set comprises an additional or alternative step according to which in case of a disturbance in the grid is detected, the control of the duration of the pilot fuel injection is effected based on the grid disturbance.

Objects of the invention are also met by an electric power generator set comprising a gas operated internal combustion piston engine coupled with an electric generator, and each cylinder of the engine is provided with a pilot fuel injector, and a controller in which the controller is arranged to operate the electric power generator set according to a method recited in any one of the claims 1 - 8.

### Brief Description of Drawings

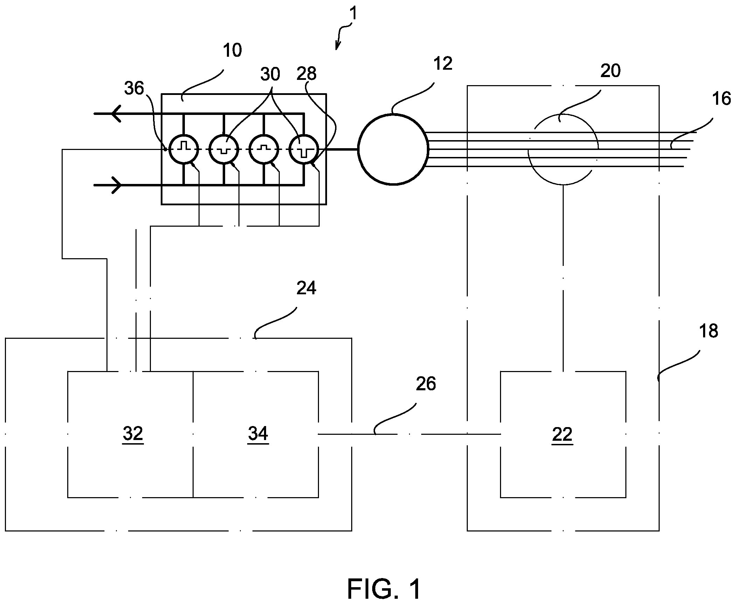

In the following, the invention will be described with reference to the accompanying exemplary, schematic drawing, in which Figure 1 illustrates an electric power generator set operated by according to an embodiment of the invention.

### Detailed Description of Drawings

Figure 1 depicts schematically an electric power generator set 1. There is a gas engine 10 coupled with an electric generator 12 arranged for producing electric power to an electric grid 16. The gas engine is of a type which comprises a pilot fuel injection system 28, by means of which combustible gas/air mixture in a combustion chamber of the engine may be ignited.

The arrangement comprises a relay arrangement 18 for detecting the state of the grid, particularly disturbance of the grid. The detecting may comprise measuring of current, voltage or both of an electric grid 15. The relay arrangement 18, for example a protection relay, is adapted to detect over-current, under-voltage or both. An embodiment of a relay arrangement comprises an instrument transformer 20 for measuring electrical quantities from the grid. The instrument transformer is in connection with a relay unit 22.

The protection relay includes so called detection function which is based on monitored signal. The detection occurs when the signal deviates from a certain predetermined limit. For example, when the generator 12 output current exceeds an over-current limit. The detection signal, which is to be used in the invention, can be formed from single or multiple sources such as over-current, under-voltage or as a combination of over-current and under-voltage.

The relay arrangement 18 has a connection 26 with a controller 24 of the engine 10. A detection signal generated by the relay arrangement 18 is transmitted to the engine controller. The controller 24 is arranged to drive the engine 10 of a generator set 1 via necessary connections with the engine making use of the detection signal according to the invention.

The controller 24 comprises an engine control unit 32, which is arranged to control the operation of the engine 10. Particularly since the fuel is ignited by using so called pilot fuel 28, which is liquid fuel, the engine control unit 32 of the controller 24 is arranged to control the timing of each pilot fuel injector 28 supplying pilot fuel into each cylinder 30 of the engine. During a normal operation of the power generator set 1 the timing of the pilot fuel injection is controlled based on engine's operational parameters aiming to minimize nitrogen oxide and unburned hydrocarbons emission to the ambient air and to produce required load. By correct control of the pilot injection timing the engine and the generator set is operating efficiently. Load on the engine affects combustion conditions in the cylinders. The quantity of pilot fuel required at light load differs from that required at heavy loads, and the quantity of the pilot fuel for prevailing load demand is also controlled suitably by the engine control unit 32 during normal operation. The quantity may be controlled independently from the timing of the injection.

The controller 24 comprises a fault detection unit 34 that is connected to the relay arrangement 18 via the connection 26. The fault detection unit 34 makes it possible to directly and quickly react on the driving signal in response to the detection signal. The detection signal generated by the relay arrangement 18 is utilized in the engine control unit 32 so that in case of a disturbance in the grid is detected by the instrument transformer 20 the detection function of the protection relay provides a detection and transmits it via the connection 26 to the fault detection unit 34 of the controller 24. And thus the information is made available to the engine control unit 32 in which the control of the timing of the pilot fuel injection is effected based on the detection of the disturbance.

The fault detection unit 34 can be formed in many ways in practice. The fault detection unit can be, for example, a software unit. The communication between the relay arrangement 18 and the controller 24 is arranged to be a fast one, such that the time between the detection of the grid disturbance and the output of the detection signal 26 is advantageously less than 10 ms. The time for forming the driving signal from the engine control unit 32 to the engine is also advantageously less than 10 ms. Therefore it can be achieved a time period less than 20 ms from the fault detection to sending the driving signal. The grid disturbance detected may be for example an over-current, under-voltage or both.

According to an embodiment of the invention the pilot fuel injection is controlled during normal operation based on engine's operational parameters, the control being realized by the engine control unit 32. During the normal operation the timing of the pilot fuel injection is controlled so that the start of injection of the pilot fuel is determined by a set value of crank angle based on the engine's operational parameters. The crank angle is detected by an angle detector 36. In case of a grid disturbance is detected the set value is retarded by predetermined crank angle value by the engine control unit 32 based on signal obtained from the fault detection unit 34. Thus the control unit 32 is arranged to overrule the set value for the normal operation based on the detected grid disturbance.

The pilot fuel is ignited advantageously by compression ignition i.e. the fuel ignites caused by the circumstances prevailing in the combustion chamber or a pre-chamber of the engine 10. Gaseous main fuel may be introduced into the engine so that gas is admitted to the inlet air in vicinity and upstream the inlet valve(s) of the cylinder. Because main gas valves cannot react quickly enough, gas will continue to flow into the engine in normal manner even if the pilot fuel introduction is changed according to the invention.

By retarding the start of injection of the pilot fuel the pilot fuel will thus ignite later and therefore also the combustible gas - air mixture in the cylinder with ignite later than during normal operation. Thus injected pilot fuel and main gas is combusted with weaker ignitability, resulting in very late start of heat release of combustion in the cylinders resulting in low indicated mean effective pressure. Thus the load of the engine drops significantly and rapidly.

With the invention it is possible to minimize the discrepancy between required load and produced power during the grid disturbance without causing the engine to over speed, avoiding desynchronization of the grid and the generator set. Additionally gas that continues to flow into the engine is still combusted, which reduces methane slip emissions and the danger of an exhaust gas explosion.

According to an embodiment of the invention the set value of the crank angle at which the pilot fuel injection is started is retarded 25 - 40° CA (crank angle) from the set value of the normal operation when the disturbance is detected. The retarding of the set crank angle value is controlled so that the load of the engine effects on the extent of reading so that the retarding is proportional to the load of the engine.

Advantageously while the engine is operates at load <= 50% the set crank angle value is retarded 25 - 35° CA so that the set crank angle value is retarded to be equal to or more than 4° CA before at top dead center. So at partial load less than 50% load the timing of the injection is se before the top dead center.

In case the engine is operated at load > 50% the set crank angle value is retarded 30 - 40° CA. At loads near 100 %, being about 80-100% the set crank angle value when the pilot fuel injection starts is retarded to be at top dead center or after that. This way, even if the combustion chamber possesses considerably heat so that the pilot fuel will ignite the main fuel with much sorter ignition delay, the retarding the start of the injection according to the invention results in late start of heat release of combustion in the cylinders providing in low indicated mean effective pressure. Thus the load of the engine drops significantly and rapidly also at high load operation.

According to the invention the crank angle determining the start of injection is maintained retarded during less than 2 seconds.

According to a simple trial run made with a 6-cylinder pilot fuel ignited gas engine it was demonstrated that retarding pilot timing at 100% load from 35° CA before top dead center to 0°CA before top dead center resulted in load reduction of 20% down to 80% load. Respectively at 50% load, load reduction down to 10% was achieved by retarding pilot fuel injection timing from 32,5° CA before top dead center to 4,5°CA before top dead center.

According to a second embodiment of the invention the duration of the pilot fuel injection may be controlled independently from controlling the timing of the invention. In this embodiment the engine control unit 32 of the controller 24 is arranged to control the timing and duration of each pilot fuel injector 28 supplying pilot fuel into each cylinder 30 of the engine. During a normal operation of the power generator set 1 the timing and duration of the pilot fuel injection is controlled based on engine's operational parameters aiming to minimize nitrogen oxide and unburned hydrocarbons emission to the ambient air and to produce required load. By correct control of the pilot injection timing and duration the engine and the generator set is operating efficiently. Load on the engine affects combustion conditions in the cylinders. As is described above in connection with the other embodiment of the invention the detection signal generated by the relay arrangement 18 is utilized in the engine control unit 32 so that in case of a disturbance in the grid is detected by the instrument transformer 20 the detection function of the protection relay provides a detection and transmits it via the connection 26 to the fault detection unit 34 of the controller 24. Now, according the second embodiment the information is made available to the engine control unit 32 in which the control of the timing and duration of the pilot fuel injection is effected based on the detection of the disturbance.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims.

## Claims

1. A method of operating an electric power generator set (1) comprising an internal combustion piston engine (10) coupled with an electric generator (12) in which method the state of the electric grid (16), to which the generator is connected, is monitored, and if a disturbance in the grid is detected the control of the internal combustion engine is effected based on the grid disturbance, **characterized in that** in the method gaseous fuel is fed as a main fuel into combustion chambers of the engine along with the combustion air, and the mixture of the gaseous fuel and air is ignited by injecting an amount of pilot fuel (28), and during the normal operation of the engine the timing of the pilot fuel injection is controlled based on engine's operational parameters to minimize nitrogen oxide and unburned hydrocarbons emission to the ambient air and to produce required load, and in case of a disturbance in the grid is detected, the discrepancy between required load and produced power during the grid disturbance is minimized by an independent control of timing and an independent control of duration of the pilot fuel injection effected in a time period of less than 20 ms, based on the grid disturbance, and the timing of the pilot fuel injection is retarded by predetermined crank angle due to the disturbance, such that the retarding of a set crank angle value determining the start of pilot fuel injection
is proportional to the load of the engine.

2. A method of operating an electric power generator set according to claim 1, **characterized in that** the set crank angle value determining the start of pilot fuel injection is retarded 25 - 40° CA.

3. A method of operating an electric power generator set according to claims 1 or 2, **characterized in that** the set crank angle value is retarded to be >=4° CA before at top dead center.

4. A method of operating an electric power generator set according to claim 1, **characterized in that** while the engine is operated at load <= 50% and the set crank angle value is retarded 25 - 35° CA.

5. A method of operating an electric power generator set according to claim 1, **characterized in that** while the engine is operate at load > 50% and the set crank angle value is retarded 30 - 40° CA.

6. A method of operating an electric power generator set according to claim 5, **characterized in that** the set crank angle value is retarded to be at top dead center or after that.

7. An electric power generator set (1) comprising a gas operated internal combustion piston engine (10) coupled with an electric generator, and each cylinder of the engine is provided with a pilot fuel injector, and a controller (24), **characterized in that** the controller (24) is arranged to operate the electric power generator set according to a method recited in any one of the preceding claims.

## Patentansprüche

1. Verfahren zum Betreiben eines Stromerzeugungsaggregats (1), umfassend einen Verbrennungskraftmotor (10), der mit einem elektrischen Generator (12) gekoppelt ist, wobei bei dem Verfahren der Zustand des Stromnetzes (16), an dem der Generator angeschlossen ist, überwacht ist und, wenn eine Störung im Netz festgestellt wird, die Steuerung der Verbrennungskraftmaschine aufgrund der Netzstörung erfolgt, **dadurch gekennzeichnet, dass** bei dem Verfahren gasförmiger Kraftstoff als Hauptkraftstoff gemeinsam mit der Verbrennungsluft in Verbrennungskammern des Motors eingespeist wird und das Gemisch aus dem gasförmigen Kraftstoff und Luft durch Einspritzen einer Menge an Vorkraftstoff (28) entzündet wird und während des normalen Betriebs des Motors der Zeitpunkt der Vorkraftstoffeinspritzung basierend auf den Betriebsparametern des Motors gesteuert wird, um die Emission von Stickoxid und unverbrannten Kohlenwasserstoffen in die Umgebungsluft zu minimieren und die erforderliche Last zu erzeugen, und im Falle, wo eine Störung im Netz erfasst wird, die Diskrepanz zwischen erforderlicher Last und erzeugter Leistung während der Netzstörung durch eine unabhängige Steuerung der Zeitsteuerung und eine unabhängige Steuerdauer der Vorkraftstoffeinspritzung minimiert wird, die in einer Zeitperiode von weniger als 20 ms basierend auf der Netzstörung bewirkt wird, und der Zeitpunkt der Vorkraftstoffeinspritzung um einen vorbestimmten Kurbelwinkel aufgrund der Störung verzögert wird, so dass die Verzögerung eines eingestellten Kurbelwinkelwerts, der den Beginn der Vorkraftstoffeinspritzung bestimmt, proportional zur Last des Motors ist.

2. Verfahren zum Betreiben eines Stromerzeugungsaggregats nach Anspruch 1, **dadurch gekennzeichnet, dass** der eingestellte Kurbelwinkelwert, der den Beginn der Voreinspritzung bestimmt, um 25-40°CA verzögert wird.

3. Verfahren zum Betreiben eines Stromerzeugungsaggregats nach Anspruch 1 oder 2, **dadurch gekennzeichnet, dass** der eingestellte Kurbelwinkelwert vor dem oberen Totpunkt auf >= 4°CA verzögert wird.

4. Verfahren zum Betreiben eines Stromerzeugungsaggregats nach Anspruch 1, **dadurch gekennzeichnet, dass**, während der Motor bei Last <=50% betrieben wird, der eingestellte Kurbelwinkelwert um 25-35°CA verzögert wird.

5. Verfahren zum Betreiben eines Stromerzeugungsaggregats nach Anspruch 1, **dadurch gekennzeichnet, dass**, während der Motor bei einer Last von >50% betrieben wird, der eingestellte Kurbelwinkelwert um 30 bis 40°CA verzögert wird.

6. Verfahren zum Betreiben eines Stromerzeugungsaggregats nach Anspruch 5, **dadurch gekennzeichnet, dass** der eingestellte Kurbelwinkelwert auf den oberen Totpunkt oder danach verzögert wird.

7. Stromerzeugungsaggregat (1), das einen gasbetriebenen Kolbenverbrennungsmotor (10), der mit einem elektrischen Generator gekoppelt ist und wobei jeder Zylinder des Motors mit einem Vorkraftstoffeinspritzer versehen ist, und eine Steuerung (24) umfasst, **dadurch gekennzeichnet, dass** die Steuerung (24) eingerichtet ist, das Stromerzeugungsaggregat gemäß einem Verfahren nach einem der vorhergehenden Ansprüche zu betreiben.

## Revendications

1. Procédé pour le fonctionnement d'un ensemble de générateur de puissance électrique (1) comprenant un moteur à piston à combustion interne (10) couplé à un générateur électrique (12), ledit procédé comprenant la surveillance de l'état du réseau électrique (16) auquel le générateur est raccordé, et si une perturbation est détectée dans le réseau, la commande du moteur à combustion interne est effectuée sur la base de la perturbation de réseau, **caractérisé en ce que** le procédé comprend l'alimentation d'un combustible gazeux en tant que combustible principal dans des chambres de combustion du moteur ensemble avec l'air de combustion, et le mélange du combustible gazeux et de l'air est allumé en injectant une quantité de combustible pilote (28), et pendant le fonctionnement normal du moteur, la synchronisation de l'injection de combustible pilote est commandée sur la base de paramètres de fonctionnement du moteur pour réduire les émissions d'oxyde d'azote et d'hydrocarbures non brûlés vers l'air ambiant et pour produire une charge requise, et en cas de détection d'une perturbation dans le réseau, l'écart entre la charge requise et la puissance produite pendant la perturbation de réseau est réduite par une commande de synchronisation indépendante et une durée de commande indépendante de l'injection de combustible pilote effectuée au cours d'une période inférieure à 20 ms, sur la base de la perturbation de réseau, et la synchronisation de l'injection de combustible pilote est retardée par un angle de vilebrequin prédéterminé en raison de la perturbation, de manière à ce que le retardement d'une valeur d'angle de vilebrequin fixée déterminant le démarrage de l'injection de combustible pilote soit proportionnel à la charge du moteur.

2. Procédé pour le fonctionnement d'un ensemble de générateur de puissance électrique selon la revendication 1, **caractérisé en ce que** la valeur d'angle de vilebrequin fixée déterminant le démarrage de l'injection de combustible pilote est retardée de 25 - 40° AV.

3. Procédé pour le fonctionnement d'un ensemble de générateur de puissance électrique selon la revendication 1 ou 2, **caractérisé en ce que** la valeur d'angle de vilebrequin fixée est retardée de manière à être >= 4° AV avant un point mort haut.

4. Procédé pour le fonctionnement d'un ensemble de générateur de puissance électrique selon la revendication 1, **caractérisé en ce que** pendant le fonctionnement du moteur avec une charge <= 50%, la valeur d'angle de vilebrequin fixée est retardée de 25 - 35° AV.

5. Procédé pour le fonctionnement d'un ensemble de générateur de puissance électrique selon la revendication 1, **caractérisé en ce que** pendant le fonctionnement du moteur avec une charge > 50%, la valeur d'angle de vilebrequin fixée est retardée de 30 - 40° AV.

6. Procédé pour le fonctionnement d'un ensemble de générateur de puissance électrique selon la revendication 5, **caractérisé en ce que** la valeur d'angle de vilebrequin fixée est retardée de manière à se trouver au point mort haut ou après celui-ci.

7. Ensemble de générateur de puissance électrique (1) comprenant un moteur à piston à combustion interne (10) fonctionnant au gaz, couplé à un générateur électrique, et chaque cylindre du moteur est pourvu d'un injecteur de combustible pilote, et un dispositif de commande (24), **caractérisé en ce que** le dispositif de commande (24) est conçu pour actionner l'ensemble de générateur de puissance électrique conformément à un procédé selon l'une quelconque des revendications précédentes.
